# EUROPEAN PATENT SPECIFICATION

(11) **EP 4 253 135 B1**
(45) Date of publication and mention of the grant of the patent: **08.07.2026**
(21) Application number: 23164143.2
(22) Date of filing: 24.03.2023
(51) Int. Cl.: B60L 55/00, B60L 53/65, B60L 53/66, B60L 53/68, B60L 53/62, B60L 58/12

(54) **VEHICLE CHARGING CONTROL SYSTEM AND METHOD FOR CONTROLLING VEHICLE-TO-VEHICLE CHARGING**
FAHRZEUGLADESTEUERUNGSSYSTEM UND -VERFAHREN ZUR STEUERUNG FÜR FAHRZEUG-ZU-FAHRZEUG-LADEN
SYSTÈME ET PROCÉDÉ DE COMMANDE DE CHARGE DE VÉHICULE POUR COMMANDER RECHARGE DE VÉHICULE À VÉHICULE

(30) Priority: 28.03.2022 GB 202204341
(43) Date of publication of application: 04.10.2023
(73) Proprietor: Jaguar Land Rover Limited, Coventry, Warwickshire CV3 4LF (GB)
(72) Inventor: Balharan, Pulkit, Coventry, CV3 4LF (GB); Choudhary, Ravi, Coventry, CV3 4LF (GB); Choudhary, Bhramar, Coventry, CV3 4LF (GB)
(74) Representative: Jaguar Land Rover Patents Department

(56) References cited:
- DE-A1- 102020 108 744
- US-A1- 2019 047 427
- US-A1- 2019 126 756
- US-A1- 2019 165 591
- US-A1- 2022 069 611

## Description

### TECHNICAL FIELD

The present disclosure relates to a vehicle charging control system and method. Aspects of the invention relate to a charging control system for controlling a vehicle-to-vehicle charging; a method of controlling a vehicle-to-vehicle charging operation; and a non-transitory computer-readable medium for causing a processor to perform the method.

### BACKGROUND

There is a continuing need to develop and expand the charging infrastructure to provide charging stations for electric vehicles (EVs), such as battery electric vehicles (BEVs). Building charging stations and the related charging infrastructure requires considerable investment and may place unwanted limitations on the use of electric vehicles, for example restricted to the grid infrastructure. The charging infrastructure may be limited in remote areas, for example in rural settings. However, problems may also arise in urban areas due to heavy usage or congestion of charging stations, for example at busy times. A vehicle may require charging on an urgent basis, for example to complete a journey or a planned route.

US20190047427 discloses a vehicle-to-vehicle charge transfer system comprising a domain control unit configured to receive one or more vehicle charge transfer parameters from a second vehicle and transfer an electrical charge from a first electric vehicle to the second electric vehicle according to the one or more received vehicle charge transfer parameters.

US20190165591 discloses a power electrics charge coupler unit that allows vehicle-to-vehicle energy transfer by forming a bidirectional buck/boost converter for supplying rapid energy transfer.

US2022/0069611 discloses a vehicle charger configured to wireless connect to a mobile device to obtain a charging instruction identifying a donor vehicle and a beneficiary vehicle.

It is an aim of the present invention to address one or more of the disadvantages associated with the prior art.

### SUMMARY OF THE INVENTION

Aspects and embodiments of the invention provide a charging control system for controlling a vehicle-to-vehicle charging; a method of controlling a vehicle-to-vehicle charging operation; and a non-transitory computer-readable medium as claimed in the appended claims
According to an aspect of the present invention there is provided a charging control system for controlling a vehicle-to-vehicle charging between a charge provider vehicle and a charge receiver vehicle, the charging control system comprising a controller configured to:
identify the charge provider vehicle and the charge receiver vehicle;
receive a vehicle charge request to request charging of the charge receiver vehicle, wherein the vehicle charge request is generated in dependence on a first user input associated with the charge provider vehicle and on a second user input associated with the charge receiver vehicle;
receive at least one vehicle connected signal to indicate that the charge provider vehicle and the charge receiver vehicle are connected to each other, wherein the vehicle connected signal is generated automatically by at least one of the charge provider vehicle and the charge receiver vehicle in dependence on an electrical connection being established between the charge provider vehicle and the charge receiver vehicle;
generate a charge confirmation request in dependence on receipt of the vehicle connected signal;
receive a charge approval signal in dependence on the charge confirmation request; and
output at least one charge initiation signal to initiate the vehicle-to-vehicle charging in dependence on receipt of the charge approval signal.

The charging control system may facilitate control of the vehicle-to-vehicle charging. For example, the charging control system may control the initiation and/or termination of the vehicle-to-vehicle charging. At least in certain embodiments, the charging control system may enable the vehicle-to-vehicle charging to be paused, resumed, stopped, interrupted or cancelled by at least one of the first and second vehicles. At least in certain embodiments, the charging control system may enable remote control of the charging process. A user may not need to be physically present near their vehicle to control the charge transfer.

There may be people driving electric vehicles with surplus charge available for planned usage (for example, having a fully charged battery); and many more who would benefit from access to relatively small power backups. The charging control system may facilitate communication between these groups, for example to implement vehicle-to-vehicle charging. At least in certain embodiments, the charging control system may provide alternative charging options to the grid infrastructure. By facilitating vehicle-to-vehicle charging, it is not necessary to rely exclusively on the grid-based charging infrastructure. This may provide greater flexibility and/or convenience for a user. This could potentially reduce the need to expand the required charging infrastructure, for example reducing the need to build new charging stations.

A typical operating scenario may comprise a first vehicle having a low state of charge which is not close to a charging station. A second vehicle may be identified having a state of charge having surplus charge (for example, more charge than is required for the second electric vehicle to complete a planned journey). The second vehicle may transfer energy to the first vehicle by performing a vehicle-to-vehicle (V2V) charging operation. At least in certain embodiments, the vehicle-to-vehicle charging operation is controlled by the charging control system.

The charging control system could be implemented in the charge provider vehicle and/or the charge receiver vehicle. Alternatively, charging control system could be implemented in a remote server, for example in a cloud-based platform.

The charging control system may be used in respect of AC charge transfer or DC charge transfer between vehicles.

The at least one charge initiation signal may comprise a charge provider vehicle initiation signal. The charge provider vehicle initiation signal may be output to the charge provider vehicle to configure the charge provider vehicle to supply charge to the charge receiver vehicle. For example, an on-board converter may be configured on the charge provider vehicle to output charge (i.e., electric current) for charging the receiver vehicle.

The at least one charge initiation signal may comprise a charge receiver vehicle initiation signal. The charge receiver vehicle initiation signal may be output to the charge receiver vehicle to configure the charge receiver vehicle to receive charge from the charge provider vehicle. For example, an on-board charging module on the receiver vehicle may be configured to receive charge (i.e., electric current) from the provider vehicle.

The charge confirmation request may comprise an authentication password. The authentication password may help to reduce or prevent unauthorised charging.

The first user input may be input into one or more of the following: directly on the charge provider vehicle (for example via a user-machine interface); and a first communication device (such as a cellular telephone) associated with the charge provider vehicle.

The second user input may be input into one or more of the following: directly on the charge receiver vehicle (for example via a user-machine interface); and a second communication device (such as a cellular telephone) associated with the charge receiver vehicle.

The charge provider vehicle and the charge receiver vehicle may be connected to each other by one or more charging cable. The one or more charging cable is suitable for transferring electric current from the charge provider vehicle to the charge receiver vehicle.

The charge provider vehicle and the charge receiver vehicle may be identified during a matching operation to match a charge provider vehicle and a charge receiver vehicle. The matching operation may be used to pair the charge provider vehicle and the charge receiver vehicle.

The first vehicle may be a first electric vehicle; and the second vehicle may be a second electric vehicle. The first vehicle and/or the second vehicle may comprise one of the following: a battery electric vehicle (BEV), a plug-in hybrid electric vehicle (PHEV) and a hybrid electric vehicle (HEV).

According to a further embodiment of the present invention there is provided a method of controlling a vehicle-to-vehicle charging operation, the vehicle-to-vehicle charging operation being performed between a charge provider vehicle and a charge receiver vehicle, wherein the method comprises:
identifying the charge provider vehicle and the charge receiver vehicle;
receiving a vehicle charge request to request charging of the charge receiver vehicle, wherein the vehicle charge request is generated in dependence on a first user input associated with the charge provider vehicle and on a second user input associated with the charge receiver vehicle;
receiving at least one vehicle connected signal to indicate that the charge provider vehicle and the charge receiver vehicle are connected to each other, wherein the vehicle connected signal is generated automatically by at least one of the charge provider vehicle and the charge receiver vehicle in dependence on an electrical connection being established between the charge provider vehicle and the charge receiver vehicle;
requesting confirmation to perform the vehicle-to-vehicle charging operation in dependence on receipt of the vehicle connected signal;
receiving approval to perform the vehicle-to-vehicle charging operation; and
initiating the vehicle-to-vehicle charging operation in dependence on the receipt of the approval.

The method of controlling a vehicle-to-vehicle charging operation may be implemented by a computer.

According to a further embodiment of the present invention there is provided a non-transitory computer-readable medium having a set of instructions stored therein which, when executed, cause a processor to perform the method(s) described herein.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

Within the scope of the claims it is expressly intended that the various aspects, embodiments, examples and alternatives set out in the preceding paragraphs, and/or in the following description and drawings, and in particular the individual features thereof, may be taken independently or in any combination.

### BRIEF DESCRIPTION OF THE DRAWINGS

One or more embodiments of the invention will now be described, by way of example only, with reference to the accompanying drawings, in which:
Figure 1 shows a schematic representation of the charging control system to control vehicle-to-vehicle charging in accordance with an embodiment of the present invention;

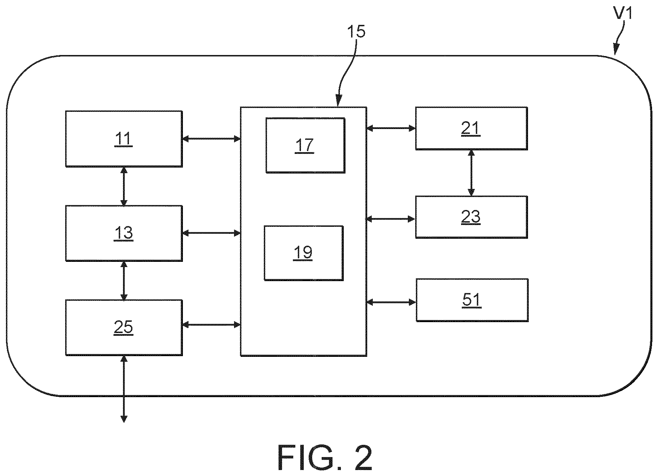

Figure 2 shows a schematic representation of a first vehicle for receiving current in a vehicle-to-vehicle charging operation controlled by the charging control system shown in Figure 1;

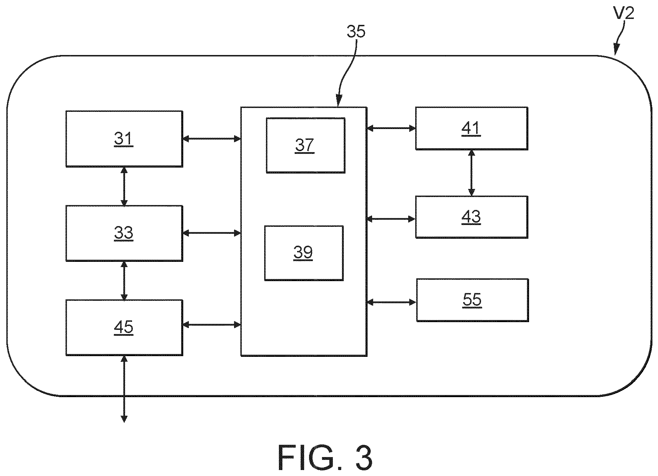

Figure 3 shows a schematic representation of a second vehicle for supplying current in a vehicle-to-vehicle charging operation controlled by the charging control system shown in Figure 1;
Figure 4 shows a schematic representation of a charging control server for controlling the vehicle-to-vehicle charging in the charging control system shown in Figure 1;
Figure 5 shows a block diagram representing operation of the charging control system in accordance with an embodiment of the present invention;
Figure 6A illustrates a vehicle-to-vehicle charging using an alternating current to direct current converter; and
Figure 6B illustrates a vehicle-to-vehicle charging using direct current.

### DETAILED DESCRIPTION

A charging control system 1 in accordance with an embodiment of the present invention is described herein with reference to the accompanying Figures. The charging control system 1 is described herein with reference to a first vehicle V1 and a second vehicle V2.

The charging control system 1 is configured to control vehicle-to-vehicle (V2V) charging between the first and second vehicles V1, V2. The vehicle-to-vehicle (V2V) charging is described herein with the first vehicle V1 configured to receive electric current supplied by the second vehicle V2 during a charging operation. In this scenario, the first vehicle V1 is a charge receiver vehicle; and the second vehicle V2 is a charge provider vehicle. The first and second vehicles V1, V2 are road vehicles, such as automobiles. The first and second vehicles V1, V2 may, for example, comprise a battery electric vehicle (BEV), a plug-in hybrid electric vehicle (PHEV) or a hybrid electric vehicle (HEV). The charging control system 1 is configured to control the vehicle-to-vehicle charging when the first and second vehicles V1, V2 are electrically connected to each other to perform the charging operation. The connection is established by a cable C1 connected to the first and second vehicles V1, V2. The charging cable C1 has an appropriate electrical rating to transfer current during the charging operation. First and second connectors CN1, CN2 are provided on the charging cable C1 for connection to the first and second vehicles V1, V2.

The charging control system 1 in the present embodiment is implemented by a charging control server 3. The charging control server 3 is a remote server and is configured to communicate with the first and second vehicles V1, V2 over a wireless communication network. The charging control server 3 is operative to receive a charging request CR1 generated by the first vehicle V1. The charging request CR1 indicates that a charge is required for an onboard traction battery on the first vehicle V1. The charging control system 1 may be operative to perform a matching function to match the first vehicle V1 to a second vehicle V2. In dependence on the charging request CR1, the charging control server 3 communicates with a plurality of other vehicles Vn to identify one or more candidate second vehicles V2 suitable for supplying electric current to provide a charging function. The charging control server 3 may, for example, communicate with vehicles Vn within a predetermined range of the first vehicle V1. A matching algorithm may be implemented to identify potential vehicle matches to form one or more pairs of the first and second vehicles V1, V2 suitable for performing vehicle-to-vehicle charging. A cost function may be applied to each candidate vehicle pairing to identify the most appropriate match. The matching function may, for example, identify one or more candidate second vehicles V2 identified as being available to perform a charging operation within a predetermined range of the first vehicle V1.

The charging request CR1 may comprise one or more of the following:
i. A unique identifier for identifying the first vehicle V1;
ii. A vehicle type and/or model identifier of the first vehicle V1;
iii. A required connector type for charging the first vehicle V1;
iv. A second state of charge SOC2 of the traction battery in the first vehicle V1;
v. A charging capacity and/or a charging rate for the first vehicle V1;
vi. A charge requirement, for example to indicate an electrical power (kW) to be transferred to the traction battery in the first vehicle V1 during the charging operation; and
vii. A temporal requirement for performing the charge operation, for example defining a time or a period of time for initiating and/or completing the charge operation.

The charging request CR1 may also include additional user information, for example to access a user account associated with the first vehicle V1. The user information may comprise login information for the user account. The user account may be implemented by the charging control server 3. Alternatively, the user account may be implemented on a separate server and the charging control server 3 may control access to the user account. The user account may be accessed to make a financial payment associated with the charging operation. The value of the financial payment may be calculated in respect of one or more of the following: a quantity of the electrical power supplied to the first vehicle V1 during the charging operation; a duration of the charging operation; a time of day; and a dynamic pricing factor, for example based on demand (to provide surge pricing). The pricing may be higher in an emergency case, for example if the first vehicle V1 is fully discharged and stranded. The dynamic pricing factor may depend on factors such as demographic information of the vehicle. The dynamic pricing factor may apply a first pricing rate if the first vehicle V is located in a remote area, and a second pricing rate if the first vehicle V1 is located in an urban area. The first and second pricing rates may be different from each other, for example the first pricing rate may be greater than the second pricing rate.

The first vehicle V1 comprises a first traction battery 11 for supplying electrical power to one or more first traction motors 13. The first vehicle V1 comprises a first controller 15 having at least one first electronic processor 17 and a first system memory 19. The first controller 15 is configured to determine a first state of charge SOC1 of the first traction battery 11. The first vehicle V1 comprises a first navigation system 21 for determining a geospatial location of the first vehicle V1. The first controller 15 is configured to communicate with the navigation system 21 to determine the geospatial location of the first vehicle V1. The first controller 15 may also access a vehicle communication network, such as a CAN bus, to determine vehicle operating parameters.

The first controller 15 comprises a first wireless communication module 23 for wireless communication with the charging control server 3. The first wireless communication module 23 is operative selectively to transmit and receive signals from the charging control server 3. By way of example, the first wireless communication module 23 may transmit a first charge request signal SCR1 comprising a charge request CR1 to request a charging operation. The first charge request signal SCR1 may be transmitted in dependence on a user input. Alternatively, the charge request signal SCR1 may be generated automatically, for example in dependence on a determination that charging of the first traction battery 11 is required to complete a current route. The first controller 15 is configured to generate a first vehicle connected signal SVC1 when the first and second vehicles V1, V2 are connected to each other. In the present embodiment, the first vehicle connected signal SVC1 is generated when the first and second vehicles V1, V2 are connected to each other by the charging cable C1. The first wireless communication module 23 transmits the first vehicle connected signal SVC1 to the charging control server 3. The first vehicle connected signal SVC1 may comprise a first vehicle identifier for uniquely identifying the first vehicle V1. The charging control server 3 uses the first vehicle identifier to identify the first vehicle V1.

The first vehicle V1 comprises a first charging module 25 for supplying electric current to the first traction battery 11 to store energy (i.e., to charge the first traction battery 11). The first charging module 25 may comprise an AC-DC converter for converting alternating current (AC) to direct current (DC) to charge the first traction battery 11. Alternatively, the first charging module 25 may comprise a direct current (DC) charging module for receiving direct current (DC). The first charging module 25 is disposed onboard the first vehicle V1 and can be connected to an external power source to receive electric current to charge the first traction battery 11. The external power source may, for example, comprise a mains electrical supply or an external (offboard) battery. As described herein, the first charging module 25 is selectively configurable to receive electric current from the second vehicle V2 to charge the first traction battery 11. Alternatively, or in addition, the first charging module 25 may receive electric current from an onboard generator, for example an internal combustion engine (not shown) disposed in the first vehicle V1.

The second vehicle V2 comprises a second traction battery 31 for supplying electrical power to one or more second traction motors 33. The second vehicle V2 comprises a second controller 35 having at least one second electronic processor 37 and a second system memory 39. The second controller 35 is configured to determine a second state of charge SOC2 of the second traction battery 31. The second vehicle V2 comprises a second navigation system 41 for determining a geospatial location of the second vehicle V2. The second controller 35 is configured to communicate with the second navigation system 41 to determine the geospatial location of the second vehicle V2. The second controller 35 may also access a vehicle communication network, such as a CAN bus, to determine vehicle operating parameters.

The second controller 35 comprises a second wireless communication module 43 for wireless communication with the charging control server 3. The second wireless communication module 43 may perform similar functions to the first wireless communication module 23, for example to transmit a second charge request signal SCR2. However, for the sake of brevity, the description herein will detail the operation of the second wireless communication 43 following generation of the first charge request signal SCR1 generated by the first vehicle V1. The second controller 35 is configured to generate a second vehicle connected signal SVC2 when the first and second vehicles V1, V2 are connected to each other. In the present embodiment, the second vehicle connected signal SVC2 is generated when the second and second vehicles V1, V2 are connected to each other by the charging cable C1. The second wireless communication module 23 transmits the second vehicle connected signal SVC2 to the charging control server 3. The second vehicle connected signal SVC2 may comprise a second vehicle identifier for uniquely identifying the second vehicle V2. The charging control server 3 uses the second vehicle identifier to identify the second vehicle V2. The second wireless communication module 43 may transmit a charge authorisation signal to the charging control server 3 to authorise a charging operation. The charge authorisation signal may, for example, be transmitted in dependence on a user input. Alternatively, the charge authorisation signal may be generated automatically, for example in dependence on a charge available flag being set to indicate that a charging operation is always available.

The second vehicle V2 comprises a second charging module 45 for supplying electric current to the second traction battery 31 to store energy (i.e., to charge the second traction battery 31). The second charging module 45 may comprise an AC-DC converter for converting alternating current (AC) to direct current (DC) to charge the second traction battery 31. Alternatively, the second charging module 45 may comprise a direct current (DC) charging module for receiving direct current (DC). The second charging module 45 is disposed onboard the second vehicle V2 and can be connected to an external power source to receive electric current to charge the second traction battery 31. The external power source may, for example, comprise a mains electrical supply or an external (offboard) battery. As described herein, the second charging module 45 can be connected to the first vehicle V1 to supply electric current to charge the first traction battery 11. Thus, the first and second vehicles V1, V2 may be connected to each other to perform vehicle-to-vehicle charging. The connection between the first and second vehicles V1, V2 is a wired connection, for example comprising the charging cable C1 having connectors CN1, CN2 for connection to the first and second charging modules 25, 45, respectively. As described herein, the first and second vehicle connected signals SVC1, SVC2 are generated when the first and second vehicles V1, V2 are connected by the charging cable C1.

The first and second controllers 15, 35 may provide administrative access rights. The administrative access rights may enable the charging process to be controlled independently from each of the first and second vehicles V1, V2 (or communication devices associated with the first and second vehicles V1, V2). The administrative access rights may enable the charge process to be interrupted or abandoned from each side, for example due to unsafe or abnormal behaviour associated with one of the first and second charging modules 25, 45.

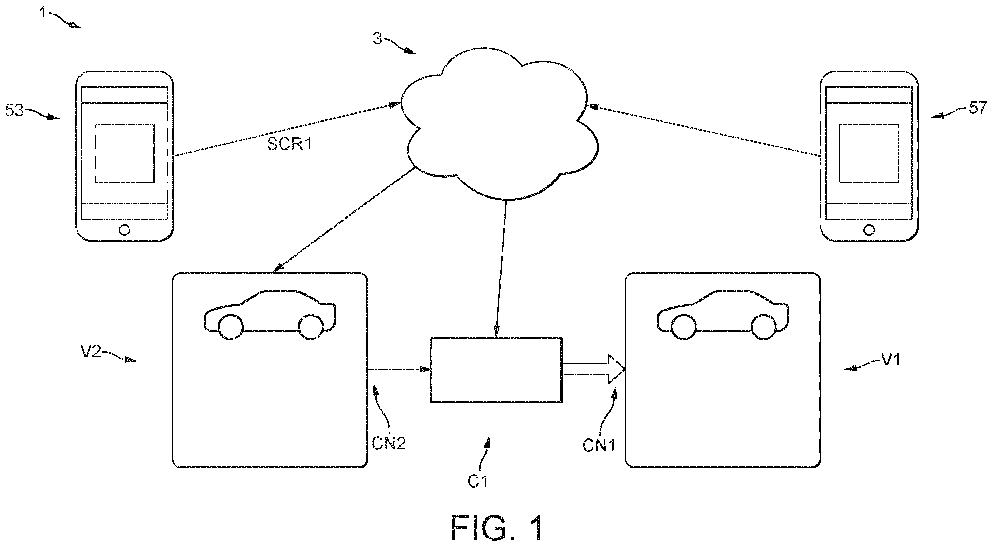

A first human machine interface (HMI) 51 is disposed on the first vehicle V1. The first HMI 51 may, for example, comprise a touch screen provided in the first vehicle V1 for detecting user inputs. The first HMI 51 is operative to control the first charging module 25 and to communicate with the charging control server 3. A first user (associated with the first vehicle V1) may, for example, operate the first HMI 51 to request a charging operation and/or to authorise a charging operation. The first HMI 51 also enables access to a first said user account associated with the first vehicle V1. The first user account may be accessed securely by communication with the charging control server 3. The first user account may be used to make payments for charging the first traction battery 11; and/or to receive payments for using the first traction battery 11 for supplying electric current to another vehicle. Alternatively, or in addition, a communication device, such as a cellular (mobile) telephone, may be used to communicate with the charging control server 3. In the present embodiment, a first communication device 53 (shown in Figure 1) is associated with the first vehicle V1. The first communication device 53 may, for example, provide access to the first user account. A software application operating on the first communication device 53 is configured to communicate with the charging control server 3. The first communication device 53 may be used instead of, or in addition to, the first wireless communication module 23 provided on the first vehicle V1 for communication with the charging control server 3.

A second human machine interface (HMI) 55 is disposed on the second vehicle V2. The second HMI 55 may, for example, comprise a touch screen provided in the second vehicle V2 for detecting user inputs. The second HMI 55 is operative to control the second charging module 45 and to communicate with the charging control server 3. A second user (associated with the second vehicle V2) may, for example, operate the second HMI 55 to request and/or authorise a charging operation. The second HMI 55 also enables access to a second user account linked to the second vehicle V2. The second user account may be accessed securely by communication with the charging control server 3. The second user account may be used to make payments for charging the second traction battery 31; and/or to receive payments for using the second traction battery 31 for supplying electric current to another vehicle. Alternatively, or in addition, a communication device, such as a cellular (mobile) telephone, may be used to communicate with the charging control server 3. A second communication device 57 (shown in Figure 1) is associated with the second vehicle V2. The second communication device 57 may, for example, provide access to the second user account. A software application operating on the second communication device 57 is configured to communicate with the charging control server 3. The second communication device 57 may be used instead of, or in addition to, the second wireless communication module 43 provided on the second vehicle V2 for communication with the charging control server 3.

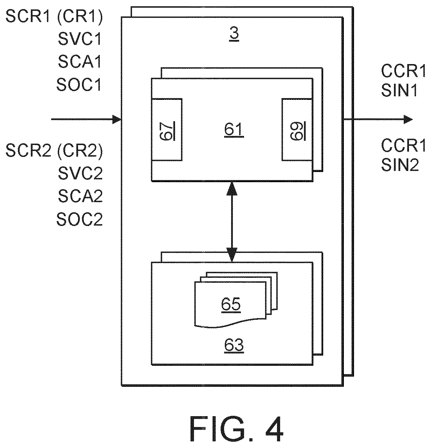

As shown in Figure 4, the charging control server 3 comprises an electronic processor 61 and a memory device 63. The server processor 61 is configured to execute a set of computational instructions 65 stored on the memory device 63. The computational instructions 65 cause the server processor 5 to perform the method(s) described herein. The server processor 61 has at least one electrical input 67 and at least one electrical output 69. The at least one electrical input 67 is configured to receive the charge request signal SCR1 from the first vehicle V1. A matching algorithm may optionally be implemented in dependence on receipt of the charge request signal SCR1 to match the first and second vehicles V1, V2.

The at least one electrical input 67 is configured to receive the first vehicle connected signal SVC1 and/or the second vehicle connected signal SVC2 generated when the first and second vehicles V1, V2 are connected to each other by the charging cable C1. The charge controller 3 may identify the first and second vehicles V1, V2 once they are connected to each other. For example, the first and second vehicles V1, V2 may be identified in dependence on the first vehicle connected signal SVC1 and/or the second vehicle connected signal SVC2. The charge controller 3 is configured to output a charge confirmation request CCR in dependence on receipt of the first vehicle connected signal SVC1 and/or the second vehicle connected signal SVC2. The charge confirmation request CCR is output to at least one of the first and second vehicles V1, V2 and/or at least one of the first and second communication devices 53, 57. A first charge confirmation request CCR1 is output to the first vehicle V1 and/or the first communication device 53 associated with the first vehicle V1. A second charge confirmation request CCR2 is output to the second vehicle V2 and/or the second communication device 57 associated with the second vehicle V2. The first and second charge confirmation requests CCR1, CCR2 are transmitted along with contact information to enable the first and second users to communicate with each other. The contact information may comprise a contact telephone number, for example.

The second charge confirmation request CCR2 in the present embodiment comprises an authentication password. The authentication password may, for example, be a one-time password (OTP) comprising a unique, randomly generated password. The OTP may, for example, be generated by the charging control server 3 and output to one of the first and second vehicles V1, V2. The OTP is input by a user and then verified by the charging control server 3. Once verified, the OTP is output to the other one of the first and second vehicles V1, V2. The first charge confirmation request CCR1 comprises a prompt requesting the authentication password. The authentication password issued with the second charge confirmation request CCR2 is relayed from the second user to the first user either in-person or remotely, for example via the first and second communication devices 53, 57. The first user responds to the first charge confirmation request CCR1 by sending a first charge approval signal SCA1 to the charging control server 3 to confirm that the charging operation is to proceed.

As prompted in the first charge confirmation request CCR1, the first charge approval signal SCA1 comprises the authentication password issued to the second user. The charging control server 3 performs a check to determine if the received authentication password matches the issued authentication password. If a match is determined, the first charge approval signal SCA1 is authenticated. If a match is not determined, the first charge approval signal SCA1 is not authenticated. The receipt of an authenticated first charge approval signal SCA1 represents a positive (affirmative) response to the first charge confirmation request CCR1 and confirms that the first user wishes to proceed with the charging operation. In dependence on receipt of the first charge approval signal SCA1, the charging controller 3 outputs at least one charge initiation signal SIN to initiate the charging operation. Alternatively, or in addition, the charging control server 3 may require receipt of a second charge approval signal SCA2 from the second user. The second charge approval signal SCA2 may represent a positive (affirmative) response to the second charge confirmation request CCR2 confirming that the second user wishes to proceed with the charging operation. The charging control server 3 may require receipt of the first and second charge approval signals SCA1, SCA2 before outputting the at least one charge initiation signal SIN to initiate the charging operation.

The at least one charge initiation signal SIN may be output to the first vehicle V1 and/or the second vehicle V2. A first charge initiation signal SIN1 may be output to the first vehicle V1 to configure the first vehicle V1 to receive charge from the second vehicle V2, for example to configure the first charging module 25 to receive current from the second vehicle V2. The first charge initiation signal SIN1 may be output to the first vehicle V1 to configure the first charging module 25 to enable charging (AC or DC charging, as appropriate) charging). A second charge initiation signal SIN2 may be output to the second vehicle V2 to configure the second vehicle V2 to supply charge to the first vehicle V1, for example to configure the second charging module 45 to supply current to the first vehicle V1. The second charge initiation signal SIN2 may be output to the second vehicle V2 to configure the second charging module 45 to enable bidirectional (vehicle-to-vehicle) charging.

The charging control server 3 is configured to output a charge termination signal STM1 to terminate the charging operation. The charge termination signal STM1 may be issued when one or more charging requirement is satisfied, for example after a predetermined time period has elapsed or a predetermined quantity of electrical power (kW) has been output from the second vehicle V2 to the first vehicle V1.

The charging control server 3 may be configured to receive at least one of the first and second states of charge SOC1, SOC2 of the first and second traction batteries 11, 31 respectively. The charging control server 3 may be configured to control the charging operation in dependence on the at least one of the first and second states of charge SOC1, SOC2. For example, the charging control server 3 may limit or inhibit the charging operation if the second state of charge SOC2 is below a predetermined threshold. Alternatively, or in addition, the charge termination signal STM1 may be issued when the first state of charge SOC1 is at a predetermined level.

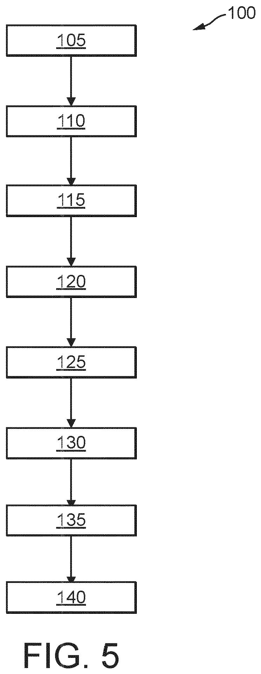

A flow chart 100 representing the operation of the charging control system 1 is shown in Figure 5. A system activation indication is received (BLOCK 105). The first and second vehicles V1, V2 are matched (BLOCK 110). The first and second vehicles V1, V2 are connected to each other by the charging cable C1. A vehicle connected signal SVC is generated to indicate that the first and second vehicles V1, V2 are connected to each other. The second vehicle V2 (the charge provider vehicle) requests a charge transfer (BLOCK 115). A charge confirmation request is sent to the second vehicle V2 and/or a second communication device 57 associated with the second vehicle V2 (BLOCK 120). The charge confirmation request optionally comprises an authentication password. The charging control system waits for a first charge approval signal SCA1 from the first vehicle V1 (charge receiver vehicle) (BLOCK 125). The charging control server 3 may reference the authentication password to authenticate the first charge approval signal SCA1. The charging control server 3 enables charging of the first vehicle V1 and the second vehicle V2 in dependence on receipt of the first charge approval signal SCA1 (BLOCK 130). At least one charge initiation signal SIN1, SIN2 may be output to the first and second vehicles V1, V2 respectively. The charging control system 1 may optionally implement a payment process (BLOCK 135), for example to receive a payment and generate a receipt. The process is terminated (BLOCK 140).

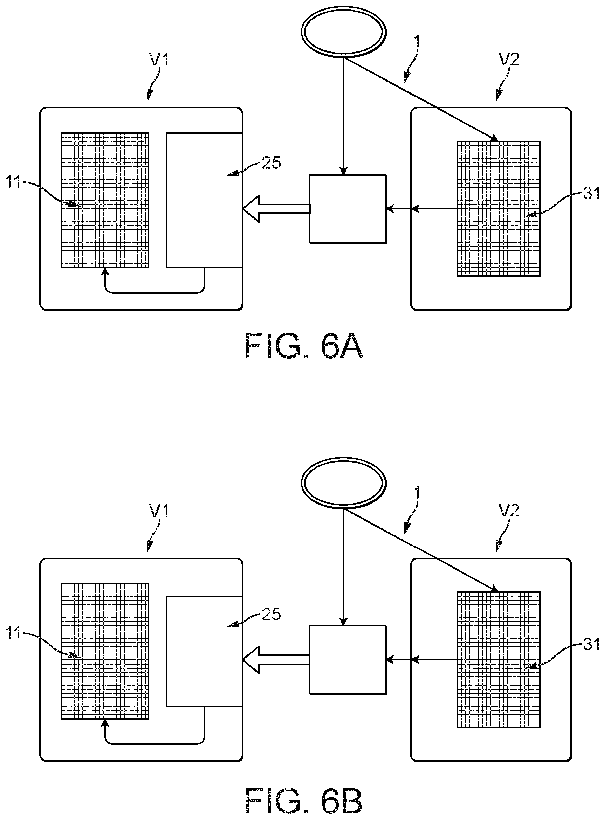

The first and second vehicles V1, V2 are connected to each other by a cable to perform charging. A schematic representation of the first and second vehicles V1, V2 connected to perform AC-DC vehicle-to-vehicle charging is shown in Figure 6A. An off-board converter (i.e. separate from the first and second vehicles V1, V2) may be provided to convert the AC to DC for charging the first traction battery 11. The off-board converter may be omitted if the first charging unit 25 comprises an AC-DC converter. A schematic representation of the first and second vehicles V1, V2 connected to perform DC vehicle-to-vehicle charging is shown in Figure 6B.

As outlined above, the server processor 61 may implement a matching algorithm to match the first and second vehicles V1, V2. This may facilitate locating the first and second vehicles V1, V2 to enable electrical connection by the charging cable C1. It will be understood that the matching algorithm may be implemented by a separate function, or the first and second vehicles V1, V2 may be matched using other techniques. As such, the implementation of the matching algorithm is not a requirement of the charging control system 1.

It will be understood that communication may be performed directly between the first vehicle V1 and the second vehicle V2. This communication may be used instead of, or in addition to, the communication between the charging control server 3 and the first and second vehicles V1, V2. For example, the charge initiation signal SIN1 and/or the charge termination signal STM1 may be output from the charging control server 3 to one of the first and second vehicles V1, V2 and relayed to the other one of the first and second vehicles V1, V2. Inter-vehicle communication between the first and second vehicles V1, V2 may be performed wirelessly, for example using a suitable wireless communication protocol; or may be performed over a wired connection, for example associated with the charging cable C1.

The first and second charge confirmation requests CCR1, CCR2 may be transmitted with additional information, for example financial information indicating financial costs (charges) associated with performing the charging operation. Alternatively, or in addition, the financial information may be transmitted to the first vehicle 51 and/or the first communication device 53. The first charge approval signal SCA1 and/or the second charge approval signal SCA2 may comprise an acceptance of the associated terms and conditions, such as financial costs and charges associated with performing the charging operation.

The charge confirmation request CCR has been described herein with reference to an authentication password, such as a one-time password (OTP). Other techniques may be used to authenticate communications. The charge confirmation request CCR may comprise a comprise a graphical code. For example, the graphical code may be a barcode or a two-dimensional (matrix) barcode, such as a QR (Quick Response) code. The charge confirmation request CCR may be transmitted to one of the first and second communication devices 53, 57 for scanning by the other one of the first and second communication devices 53, 57. The successful scanning of the graphical code may trigger transmittal of the first charge approval signal SCA1 confirming that the first user wishes to proceed with the charging operation. The first charge approval signal SCA1 may be transmitted automatically when the graphical code is scanned; or a user prompt may be generated seeking user confirmation before generating the first charge approval signal SCA1.

The charging control system 1 has been described herein with particular reference to a charging control server 3. It will be understood that at least some of the functions described herein may be implemented by on the first controller 15 disposed in the first vehicle V1 and/or the second controller 35 disposed in the second vehicle V2.

## Claims

1. A charging control system (1) for controlling a vehicle-to-vehicle charging between a charge provider vehicle (V2) and a charge receiver vehicle (V1), the charging control system (1) comprising a controller (15, 35) configured to:
identify the charge provider vehicle (V2) and the charge receiver vehicle (V1);
receive a vehicle charge request (SCR1, SCR2) to request charging of the charge receiver vehicle (V1),
wherein the vehicle charge request (SCR1, SCR2) is generated in dependence on a first user input associated with the charge provider vehicle (V2) and on a second user input associated with the charge receiver vehicle (V1);
receive at least one vehicle connected signal (SVC1, SVC2) to indicate that the charge provider vehicle (V2) and the charge receiver vehicle (V1) are connected to each other,
wherein the vehicle connected signal (SVC1, SVC2) is generated automatically by at least one of the charge provider vehicle (V2) and the charge receiver vehicle (V1) in dependence on an electrical connection being established between the charge provider vehicle (V2) and the charge receiver vehicle (V1);
generate a charge confirmation request (CCR) in dependence on receipt of the vehicle connected signal (SVC1, SVC2);
receive a charge approval signal (SCA1, SCA2) in dependence on the charge confirmation request (CCR); and
output at least one charge initiation signal (SIN) to initiate the vehicle-to-vehicle charging in dependence on receipt of the charge approval signal (SCA1, SCA2).

2. A charging control system (1) as claimed in claim 1, wherein the at least one charge initiation signal (SIN) comprises a charge provider vehicle (V2) initiation signal (SIN) which is output to the charge provider vehicle (V2) to configure the charge provider vehicle (V2) to supply charge to the charge receiver vehicle (V1).

3. A charging control system (1) as claimed in claim 1 or claim 2, wherein the at least one charge initiation signal (SIN) comprises a charge receiver vehicle (V1) initiation signal (SIN) which is output to the charge receiver vehicle (V1) to configure the charge receiver vehicle (V1) to receive charge from the charge provider vehicle (V2).

4. A charging control system (1) as claimed in any one of claim 1, 2 or 3, wherein the charge confirmation request (CCR) comprises an authentication password.

5. A charging control system (1) as claimed in any one of the preceding claims, wherein the first user input is generated directly on the charge provider vehicle (V2) or on a first communication device (53) associated with the charge provider vehicle (V2).

6. A charging control system (1) as claimed in any one of the preceding claims, wherein the second user input is generated directly on the charge receiver vehicle (V1) or on a second communication device (53) associated with the charge receiver vehicle (V1).

7. A charging control system (1) as claimed in any one of the preceding claims, wherein the charge provider vehicle (V2) and the charge receiver vehicle (V1) may be identified during a matching operation to match a charge provider vehicle (V2) and a charge receiver vehicle (V1).

8. A method of controlling a vehicle-to-vehicle charging operation, the vehicle-to-vehicle charging operation being performed between a charge provider vehicle (V2) and a charge receiver vehicle (V1), wherein the method comprises:
identifying the charge provider vehicle (V2) and the charge receiver vehicle (V1);
receiving a vehicle charge request (SCR1, SCR2) to request charging of the charge receiver vehicle (V2), wherein the vehicle charge request (SCR1, SCR2) is generated in dependence on a first user input associated with the charge provider vehicle (V2) and on a second user input associated with the charge receiver vehicle (V1);
receiving at least one vehicle connected signal (SVC1, SVC2) to indicate that the charge provider vehicle (V2) and the charge receiver vehicle (V1) are connected to each other,
wherein the vehicle connected signal (SVC1, SVC2) is generated automatically by at least one of the charge provider vehicle (V2) and the charge receiver vehicle (V1) in dependence on an electrical connection being established between the charge provider vehicle (V2) and the charge receiver vehicle (V1);
requesting confirmation to perform the vehicle-to-vehicle charging operation in dependence on receipt of the vehicle connected signal (SVC1, SVC2);
receiving approval to perform the vehicle-to-vehicle charging operation; and
initiating the vehicle-to-vehicle charging operation in dependence on the receipt of the approval.

9. A non-transitory computer-readable medium having a set of instructions stored therein which, when executed, cause a processor to perform the method claimed in claim 8.

## Patentansprüche

1. Ladesteuersystem (1) zum Steuern eines Fahrzeug-zu-Fahrzeug-Ladens zwischen einem Ladebereitstellungsfahrzeug (V2) und einem Ladeempfangsfahrzeug (V1), das Ladesteuersystem (1) umfassend eine Steuerung (15, 35), die konfiguriert ist zum:
Identifizieren des Ladebereitstellungsfahrzeugs (V2) und des Ladeempfangsfahrzeugs (V1);
Empfangen einer Fahrzeugladeanforderung (SCR1, SCR2), um das Laden des Ladeempfangsfahrzeugs (V1) anzufordern,
wobei die Fahrzeugladeanforderung (SCR1, SCR2) in Abhängigkeit von einer ersten Benutzereingabe, die dem Ladebereitstellungsfahrzeug (V2) zugeordnet ist, und von einer zweiten Benutzereingabe, die dem Ladeempfangsfahrzeug (V1) zugeordnet ist, erzeugt wird;
Empfangen mindestens eines Fahrzeug-verbunden-Signals (SVC1, SVC2), um anzuzeigen, dass das Ladebereitstellungsfahrzeug (V2) und das Ladeempfangsfahrzeug (V1) miteinander verbunden sind,
wobei das Fahrzeug-verbunden-Signal (SVC1, SVC2) automatisch durch mindestens eines des Ladebereitstellungsfahrzeugs (V2) und des Ladeempfangsfahrzeugs (V1) in Abhängigkeit davon erzeugt wird, dass eine elektrische Verbindung zwischen dem Ladebereitstellungsfahrzeug (V2) und dem Ladeempfangsfahrzeug (V1) hergestellt wird;
Erzeugen einer Ladebestätigungsanforderung (CCR) in Abhängigkeit von einem Empfang des Fahrzeug-verbunden-Signals (SVC1, SVC2);
Empfangen eines Ladefreigabesignals (SCA1, SCA2) in Abhängigkeit von der Ladebestätigungsanforderung (CCR); und
Ausgeben mindestens eines Ladeinitiierungssignals (SIN), um das Fahrzeug-zu-Fahrzeug-Laden in Abhängigkeit von dem Empfang des Ladefreigabesignals (SCA1, SCA2) zu initiieren.

2. Ladesteuersystem (1) nach Anspruch 1, wobei das mindestens eine Ladeinitiierungssignal (SIN) ein Initiierungssignal (SIN) des Ladebereitstellungsfahrzeugs (V2) umfasst, das an das Ladebereitstellungsfahrzeug (V2) ausgegeben wird, um das Ladebereitstellungsfahrzeug (V2) zu konfigurieren, Ladung an das Ladeempfangsfahrzeug (V1) zu liefern.

3. Ladesteuersystem (1) nach Anspruch 1 oder 2, wobei das mindestens eine Ladeinitiierungssignal (SIN) ein Initiierungssignal (SIN) des Ladeempfangsfahrzeugs (V1) umfasst, das an das Ladeempfangsfahrzeug (V1) ausgegeben wird, um das Ladeempfangsfahrzeug (V1) zu konfigurieren, Ladung von dem Ladebereitstellungsfahrzeug (V2) zu empfangen.

4. Ladesteuersystem (1) nach einem der Ansprüche 1, 2 oder 3, wobei die Ladebestätigungsanforderung (CCR) ein Authentifizierungspasswort umfasst.

5. Ladesteuersystem (1) nach einem der vorstehenden Ansprüche, wobei die erste Benutzereingabe direkt an dem Ladebereitstellungsfahrzeug (V2) oder an einer ersten Kommunikationsvorrichtung (53), die dem Ladebereitstellungsfahrzeug (V2) zugeordnet ist, erzeugt wird.

6. Ladesteuersystem (1) nach einem der vorstehenden Ansprüche, wobei die zweite Benutzereingabe direkt an dem Ladeempfangsfahrzeug (V1) oder an einer zweiten Kommunikationsvorrichtung (53), die dem Ladeempfangsfahrzeug (V1) zugeordnet ist, erzeugt wird.

7. Ladesteuersystem (1) nach einem der vorstehenden Ansprüche, wobei das Ladebereitstellungsfahrzeug (V2) und das Ladeempfangsfahrzeug (V1) während eines Zuordnungsvorgangs identifiziert werden können, um ein Ladebereitstellungsfahrzeug (V2) und ein Ladeempfangsfahrzeug (V1) zuzuordnen.

8. Verfahren zum Steuern eines Fahrzeug-zu-Fahrzeug-Ladevorgangs, wobei der Fahrzeug-zu-Fahrzeug-Ladevorgang zwischen einem Ladebereitstellungsfahrzeug (V2) und einem Ladeempfangsfahrzeug (V1) durchgeführt wird, wobei das Verfahren umfasst:
Identifizieren des Ladebereitstellungsfahrzeugs (V2) und des Ladeempfangsfahrzeugs (V1);
Empfangen einer Fahrzeugladeanforderung (SCR1, SCR2), um das Laden des Ladeempfangsfahrzeugs (V1) anzufordern, wobei die Fahrzeugladeanforderung (SCR1, SCR2) in Abhängigkeit von einer ersten Benutzereingabe, die dem Ladebereitstellungsfahrzeug (V2) zugeordnet ist, und von einer zweiten Benutzereingabe, die dem Ladeempfangsfahrzeug (V1) zugeordnet ist, erzeugt wird;
Empfangen mindestens eines Fahrzeug-verbunden-Signals (SVC1, SVC2), um anzuzeigen, dass das Ladebereitstellungsfahrzeug (V2) und das Ladeempfangsfahrzeug (V1) miteinander verbunden sind,
wobei das Fahrzeug-verbunden-Signal (SVC1, SVC2) automatisch durch mindestens eines des Ladebereitstellungsfahrzeugs (V2) und des Ladeempfangsfahrzeugs (V1) in Abhängigkeit davon erzeugt wird, dass eine elektrische Verbindung zwischen dem Ladebereitstellungsfahrzeug (V2) und dem Ladeempfangsfahrzeug (V1) hergestellt wird;
Anfordern einer Bestätigung, um den Fahrzeug-zu-Fahrzeug-Ladevorgang in Abhängigkeit von dem Empfang des Fahrzeug-verbunden-Signals (SVC1, SVC2) durchzuführen;
Empfangen einer Freigabe, um den Fahrzeug-zu-Fahrzeug-Ladevorgang durchzuführen; und
Initiieren des Fahrzeug-zu-Fahrzeug-Ladevorgangs in Abhängigkeit von dem Empfang der Freigabe.

9. Nichtflüchtiges computerlesbares Medium, das einen Satz von Anweisungen aufweist, die darin gespeichert sind, die, wenn sie ausgeführt werden, einen Prozessor veranlassen, das Verfahren nach Anspruch 8 durchzuführen.

## Revendications

1. Système de commande de charge (1) permettant de commander une charge de véhicule à véhicule entre un véhicule fournisseur de charge (V2) et un véhicule récepteur de charge (V1), le système de commande de charge (1) comprenant un dispositif de commande (15, 35) configuré pour :
identifier le véhicule fournisseur de charge (V2) et le véhicule récepteur de charge (V1) ;
recevoir une demande de charge de véhicule (SCR1, SCR2) pour demander une charge du véhicule récepteur de charge (V1),
dans lequel la demande de charge de véhicule (SCR1, SCR2) est générée en fonction d'une première entrée utilisateur associée au véhicule fournisseur de charge (V2) et d'une seconde entrée utilisateur associée au véhicule récepteur de charge (V1) ;
recevoir au moins un signal connecté au véhicule (SVC1, SVC2) pour indiquer que le véhicule fournisseur de charge (V2) et le véhicule récepteur de charge (V1) sont connectés l'un à l'autre,
dans lequel le signal connecté au véhicule (SVC1, SVC2) est généré automatiquement par au moins l'un parmi le véhicule fournisseur de charge (V2) et le véhicule récepteur de charge (V1) en fonction d'une connexion électrique établie entre le véhicule fournisseur de charge (V2) et le véhicule récepteur de charge (V1) ;
générer une demande de confirmation de charge (CCR) en fonction d'une réception du signal connecté au véhicule (SVC1, SVC2) ;
recevoir un signal d'approbation de charge (SCA1, SCA2) en fonction de la demande de confirmation de charge (CCR) ; et
émettre au moins un signal de lancement de charge (SIN) pour lancer la charge de véhicule à véhicule en fonction d'une réception du signal d'approbation de charge (SCA1, SCA2).

2. Système de commande de charge (1) selon la revendication 1, dans lequel l'au moins un signal de lancement de charge (SIN) comprend un signal de lancement (SIN) de véhicule fournisseur de charge (V2) qui est émis vers le véhicule fournisseur de charge (V2) pour configurer le véhicule fournisseur de charge (V2) pour fournir une charge au véhicule récepteur de charge (V1).

3. Système de commande de charge (1) selon la revendication 1 ou la revendication 2, dans lequel l'au moins un signal de lancement de charge (SIN) comprend un signal de lancement (SIN) de véhicule récepteur de charge (V1) qui est émis vers le véhicule récepteur de charge (V1) pour configurer le véhicule récepteur de charge (V1) pour recevoir une charge en provenance du véhicule fournisseur de charge (V2).

4. Système de commande de charge (1) selon l'une quelconque des revendications 1, 2 ou 3, dans lequel la demande de confirmation de charge (CCR) comprend un mot de passe d'authentification.

5. Système de commande de charge (1) selon l'une quelconque des revendications précédentes, dans lequel la première entrée utilisateur est générée directement sur le véhicule fournisseur de charge (V2) ou sur un premier dispositif de communication (53) associé au véhicule fournisseur de charge (V2).

6. Système de commande de charge (1) selon l'une quelconque des revendications précédentes, dans lequel la seconde entrée utilisateur est générée directement sur le véhicule récepteur de charge (V1) ou sur un second dispositif de communication (53) associé au véhicule récepteur de charge (V1).

7. Système de commande de charge (1) selon l'une quelconque des revendications précédentes, dans lequel le véhicule fournisseur de charge (V2) et le véhicule récepteur de charge (V1) peuvent être identifiés au cours d'une opération de mise en correspondance pour faire correspondre un véhicule fournisseur de charge (V2) et un véhicule récepteur de charge (V1).

8. Procédé permettant de commander une opération de charge de véhicule à véhicule, l'opération de charge de véhicule à véhicule étant réalisée entre un véhicule fournisseur de charge (V2) et un véhicule récepteur de charge (V1), dans lequel le procédé comprend :
l'identification du véhicule fournisseur de charge (V2) et du véhicule récepteur de charge (V1) ;
la réception d'une demande de charge de véhicule (SCR1, SCR2) pour demander une charge du véhicule récepteur de charge (V2), dans lequel la demande de charge de véhicule (SCR1, SCR2) est générée en fonction d'une première entrée utilisateur associée au véhicule fournisseur de charge (V2) et d'une seconde entrée utilisateur associée au véhicule récepteur de charge (V1) ;
la réception d'au moins un signal connecté au véhicule (SVC1, SVC2) pour indiquer que le véhicule fournisseur de charge (V2) et le véhicule récepteur de charge (V1) sont connectés l'un à l'autre,
dans lequel le signal connecté au véhicule (SVC1, SVC2) est généré automatiquement par au moins l'un parmi le véhicule fournisseur de charge (V2) et le véhicule récepteur de charge (V1) en fonction d'une connexion électrique établie entre le véhicule fournisseur de charge (V2) et le véhicule récepteur de charge (V1) ;
la demande de confirmation indiquant de réaliser l'opération de charge de véhicule à véhicule en fonction d'une réception du signal connecté au véhicule (SVC1, SVC2) ;
la réception d'une approbation pour réaliser l'opération de charge de véhicule à véhicule ; et
le lancement de l'opération de charge de véhicule à véhicule en fonction de la réception de l'approbation.

9. Support non transitoire lisible par ordinateur ayant un ensemble d'instructions stockées sur celui-ci qui, lorsqu'elles sont exécutées, amènent un processeur à réaliser le procédé selon la revendication 8.
